Europäisches Patentamt

European Patent Office (11) Publication number: **0 026 854**

Office européen des brevets A2

(12) **EUROPEAN PATENT APPLICATION**

(21) Application number: **80105433.9**

(22) Date of filing: **11.09.80**

(51) Int. Cl.³: **B 01 D 46/00**, B 01 D 53/04, B 01 D 53/34

(30) Priority: **14.09.79 AU 497/79**

(43) Date of publication of application: **15.04.81** Bulletin 81/15

(84) Designated Contracting States: **AT BE CH DE FR GB IT LI LU NL SE**

(71) Applicant: **Jingado Pty. Limited, 138A Kangaroo Point Road Kangaroo Point, Sylvania New South Wales 2224 (AU)**

(72) Inventor: **Lloyd, Robert, 7 Karalee Road, Galston New South Wales 2159 (AU)**
Inventor: **Turner, Maxwell James, 138A Kangaroo Point Road Kangaroo Point, Sylvania New South Wales 2224 (AU)**

(74) Representative: **Baillie, Iain Cameron et al, c/o Ladas & Parry Blumenstrasse 48, D-8000 München 2 (DE)**

(54) Process and apparatus for the production of clean high-pressure gas.

(57) The production of high pressure clean gas from hydrocarbon fuels such as pulverised coal has many problems most of which lie in the cleaning of the gas stream. A process and apparatus are provided which propagate gas at a temperature of up to 2700° F and a pressure of 3000 p.s.i. By operating the process of a high pressure and density it is possible to clean a smaller volume of gas using low flowrate apparatus. Activated carbon filters are used to clean the gas and convert excess oxygen and nitric oxides to carbon dioxide and nitrogen, thus reducing the pollutant content of the gas.

- 1 -

"GAS GENERATOR"

This invention relates to a clean gas generator. By "clean gas" is meant that a relatively pollution-free high pressure gas is produced.

The ideal combustion of commercial hydrocarbon fuel involves a reaction between the carbon and hydrogen with oxygen to form carbon dioxide and water. However, commercial fuels do not burn ideally, and pollutants are formed. In particular, nitrogen present in the combustion air forms certain nitrogen oxides which are a major source of pollution.

In the combustion of commercial hydrocarbon fuels, there are five (5) major problems resulting from the combustion, as follows:-

1. Solid particles in the form of ash are released from the hydrocarbons and are expelled with the combustion gases;

2. Solid unburnt particles of hydrocarbons (e.g. coal) are also produced with the combustion gases when incomplete combustion takes place;

3. To obtain complete combustion additional oxygen must be added in the form of excess air, however, temperatures in excess of 2,900°F. are normally produced by combustion of the oxygen that does not combine with the carbon or hydrogen and instead combines with the nitrogen to give oxides of nitrogen which are pollutant. The creation of oxides of nitrogen is a chemical reaction created by association and temperature;

4. Sulphur contained in the fuel in any form whatsoever will chemically combine with the oxygen in the air to form oxides of sulphur which are also major pollutants;

5. When fuel is burned in air, the volume of the products of combustion is large due to the presence of nitrogen in the air.

The solution to these problems is often greater and more costly, energy-wise, than the value of the energy released from the fuel.

It is possible by conventional methods, to overcome problems 1 and 2. When the sulphur content is sufficiently high, electrostatic precipitators can be used. However, in the case of the formation of nitrogen oxides, there are no commercially viable methods available for removing them from these large volumes of gases.

In the case of oxides of sulphur such as $SO_2$, gas scrubbers may be used. However, these in themselves are very expensive to run.

It is an aim of this invention to overcome the fifth problem wherein large volumes of gas are produced. Thus the invention provides for combustion of hydrocarbon fuel at high pressures with resultant reduced volume and increased density. Therefore, it is possible to apply the techniques of filtering and centrifugal cleaning, with economies that are not achievable at low pressure.

In one broad form the invention provides a process for the production of relatively clean high-pressure gas comprising combusting a hydrocarbon fuel at a temperature less than 2900°F, shrouding the combustion zone with precombusted gases to control the combustion zone temperature, passing the resultant combustion gas through

      (i)   particulate separation means to remove the major portion of the ash particles followed by

      (ii) a filter bank comprising activated carbon filters and a fine particulates filter; and means for controlling the rate of combustion.

In a further broad form the invention provides apparatus for producing a relatively clean high pressure gas comprising hydrocarbon fuel supply means, a fuel burner capable of burning fuel at up to 2900°F and 3000 p.s.i., means for feeding precombusted gas into the combustion chamber of said burner in a manner to shroud the walls of said burner from the combustion flame and to control the flame temperature, solids-gas separation means for separating a major portion of the ash from the gas stream received from the combustion chamber, activated carbon gas contacting means adapted to receive gas from said solid-gas separation means, said activated carbon means being replaceable by uncontaminated activated carbon as its effectiveness decreases and particulate filtration means adapted to remove substantially all solids remaining in said gas stream following treatment with activated carbon, and control means to control the combustion rate and temperature according to the gas rate and composition leaving said apparatus.

However, in the combustion of fuel with the exact amount of air in a chamber at a high pressure there is created a combination of very high temperatures and pressures. To overcome this problem the method of this invention shrouds the combustion in precombusted gas thereby reducing the temperature and pressure to technically viable limits for known refractories and metals. The fuel is combusted with air in the primary combustion chamber at normal working pressure up to 3,000 p.s.i., and depending on the fuel and required final pressure the temperature would be in the range of about 1,500 to 2,400$^{\circ}$F. As the internal flame temperature would otherwise exceed 2,900$^{\circ}$F. the shrouding gases mix with the products of combustion reducing the temperature and pressure to below these levels. The fuel is thus added to the combustion chamber from large containers using mechanical pumps feeding a burner. The air for combustion comes from a compressor and an accumulator tank as does the precombusted gas for shrouding and cooling. The ash particles generated in the combustion and the products of combustion enter particle-gas separation apparatus. The solids-gas separation apparatus preferably comprises a spiral chamber which rotates the fluid flow through a helical passage constructed of refractories at velocities which permit the fallout of the majority of solid particles removed through slots around the perimeter of the spiral. The products of combustion containing carbon dioxide, nitrogen and other oxides of nitrogen, sulphur and steam pass in to a chamber which contains a replaceable activated carbon filter followed by an alumina or silica replaceable filter. All gas at the high pressure and density pass through these filters, the effect being that virtually any remaining particles will be deposited on the alumina or silica filter. The sulphur oxides are adsorbed onto the activated carbon filter and so are removed from the gas.

The absence of acid forming compounds in the cleaned product gases, makes it possible to expand the gases well below their dew point temperature.

- 4 -

The invention will now be described by way of example only with reference to the accompanying drawings, wherein:

Figure 1 is a process flow sheet of the preferred form of the invention;

Figure 2 is an end view section of 2-2 of Figure 3;

Figure 3 is a side elevation in part cut away section of the combustion chamber and coal bins of Figure 1;

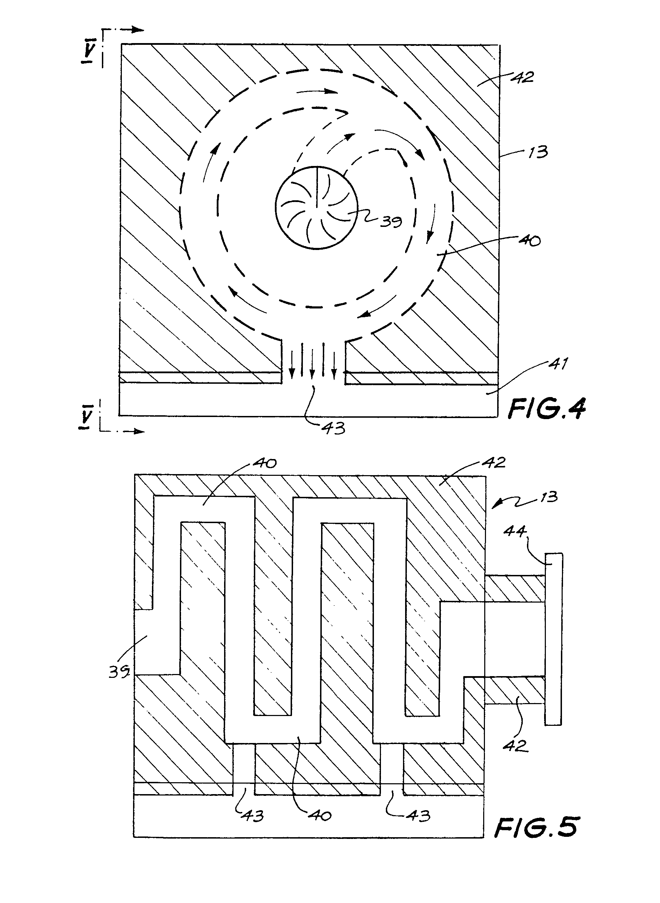

Figure 4 is a view of the section 4-4 of Figure 1;

Figure 5 is a side cut away elevation of the section 5-5 of Figure 4;

Figure 6 is a cut away view of one of the filters of Figure 1; and

Figure 7 is an end view of the filter arrangement of Figure 1.

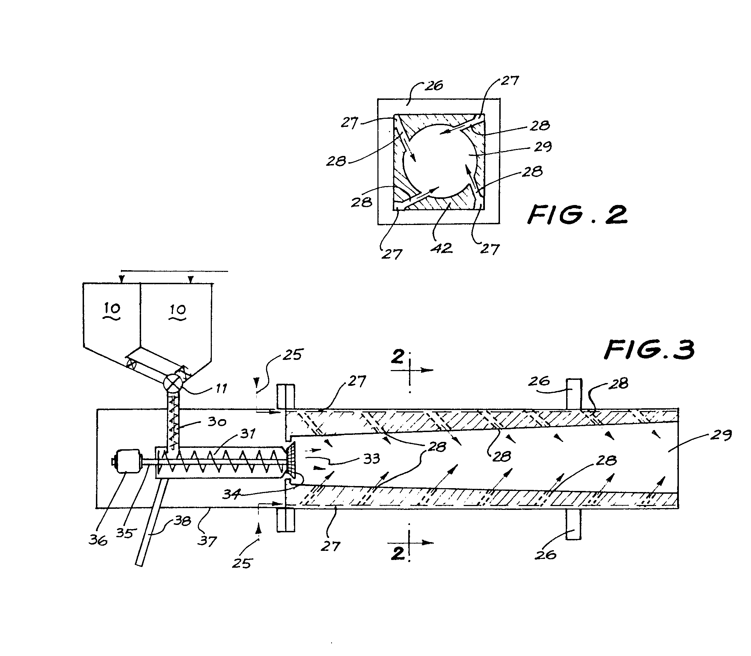

Coal is fed into two sealable bins 10. The bins are sealed and fed, one after the other, through the valves 11 and by means of screw conveyors 30 and 31 (Figure 2), to a burner 33. The burner has a rotary head 33 which is driven by a motor 36 and shaft 35. The whole combination of motor, shaft and burner is sealed within a chamber 37. Compressed air is fed through duct 38 to the end of the screw conveyor 31 to assist movement of the coal particles along the conveyor and to provide a certain mixing of the air prior to expulsion from the burner head 33. The air is pre-heated to just below combustion temperature and has a pressure up to 3,000 p.s.i. As the air and coal leave the burner head 33 combustion takes place. As the combustion is taking place inert gas 25 is fed through side nozzles 28 to create turbulence within the combustion chamber 29, and to cool the refractory walls 42. The inert gas 25 is fed along the corner ducts 27 of the chamber and has a series of jets 28 which act as directional swirling jets so that they enter the chamber both at an angle to the longitudinal axis of the chamber and in a spiral manner to ensure the swirling of the flame takes place in the chamber 29. It is desirable to keep the gas temperature below the fusion temperature of the ash to prevent "wet" ash sticking to the walls of the apparatus and blocking the flow channels.

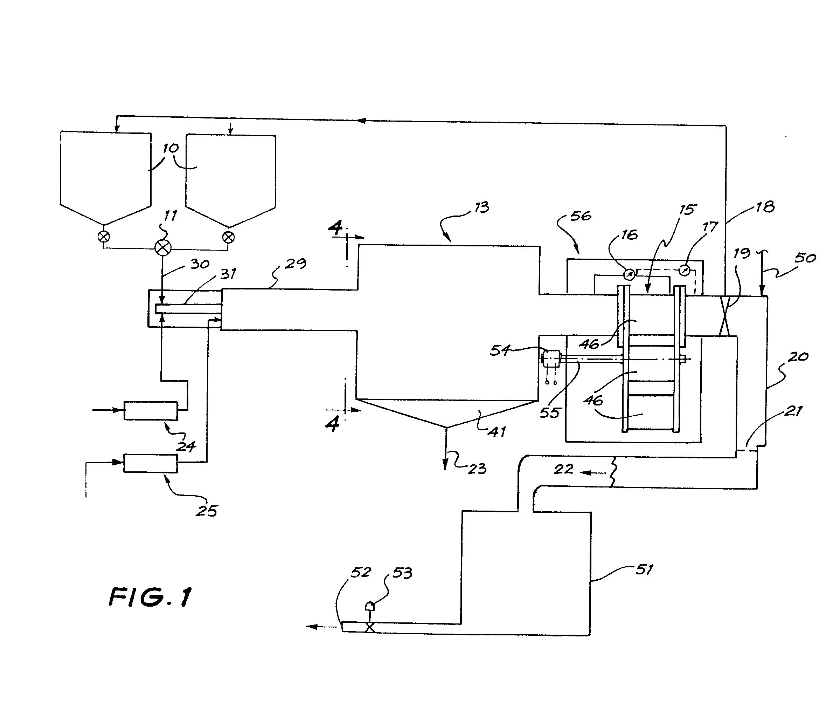

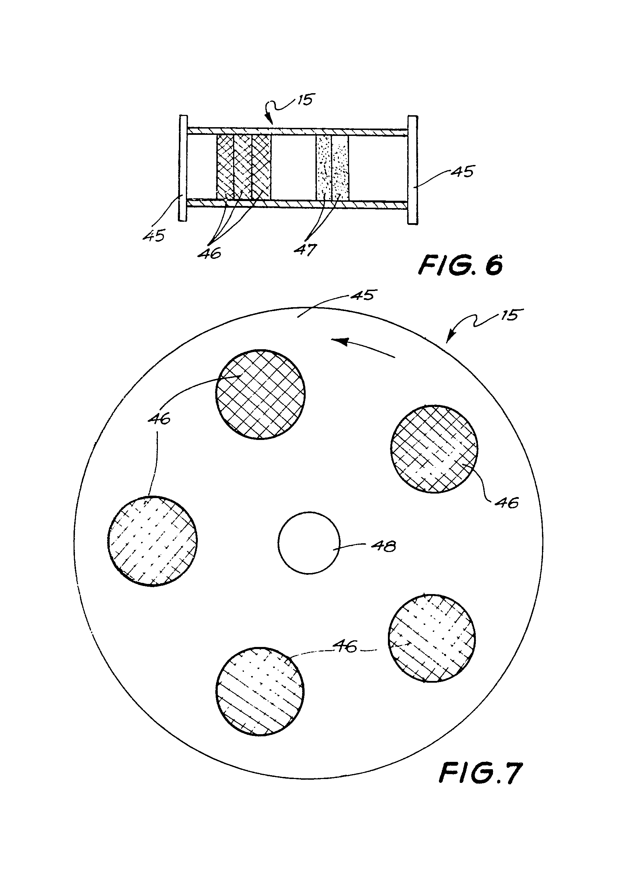

The combustion chamber 29 is attached to an ash collection chamber wherein the gaseous products of combustion containing any particulate ash which may be present, enter the ash collection chamber which comprises a spiral type path set in refractory wherein the ash particles as they pass around the lower and outer radial portions of the path 40 drop out to an ash collection chamber 13. The solids-free gas then passes from the ash collection chamber 13 into a filter portion 15, wherein the gas passes through a bank of activated carbon filters 46 prior to passing through silica filters 47. The filter bank comprises a series of, say, 5 filter cartridges 46 mounted on a shaft 55 driven by motor 54 and located between rotary flanges 45, as shown in Figures 1 and 7. The rotary filter bank can be contained within a pressure vessel 56 to assist in ensuring a seal to contain the high pressure if necessary.

As the gas contacts the filter, excess oxygen is converted to $CO_2$ and CO, sulphur oxides are adsorbed, and traces of remaining ash are filtered out. When the pressure drop reaches a level high enough to indicate that filters have been spent then pressure measuring device 16 registers this change in pressure and causes rotation of the filter bank so that the next fresh filter 46 is moved into position for contact with the gas leaving the ash collection chamber. Rotation of the filter bank is achieved by means of the motor 54 driven axial shaft 55 upon which the filter bank is mounted. The filter bank apparatus is sealed within chamber 56.

A nitrogen oxide measuring device 17 also notes if the nitrogen level is too high and consequently shall cause a rotation of the filters to bring in a fresh filter. The baffle means 19 control the rate of flow of the gas through the system and at this point gas may be bled off through line 18 back to the sealed coal bins. It is important to feed gas back to the sealed coal bins to assist in pre-heating the coal and ensure the circuit is maintained in a closed manner whilst still allowing the coal to feed from the bins 10. The gases leaving the filters may have a temperature of around $2,200^{\circ}F$. and comprise carbon dioxide, nitrogen, carbon monoxide and water. As the gases pass through the flow control baffle 19 there is an injection of high pressure air at approximately $200^{\circ}F$. This will convert carbon monoxide into carbon dioxide and also lower the temperature of the gases to around 1,800$^O$F. A further injection of burnt gases 50 in the duct 20 further reduces the temperature down to around 1,500$^O$F. and orifice 21 allows for flow control from this point. The gases are thus at a very high pressure about 2,400 p.s.i. and temperatures of around 1,500$^O$F. the gases may then be fed to an accumulation tank 51 is monitored so that when it has reached the maximum operating pressure the fuel flow to the burner 33 is reduced along with the primary and secondary air controls and this slows the system down until gas has been removed from the accumulation tank.

Injection of gas at various temperatures and pressures along the flow path from the combustion chamber to the accumulation chamber may be necessary to achieve the desired results.

It will be appreciated that the gas in the accumulation tank can be taken off 52 border control 53 and used to drive any type of turbine, reciprocating motor or any other use requiring a high pressure gas.

It will also be realized that the burner has been described for use with coal but is obviously just as effective with regard to liquid and gaseous hydrocarbon fuel.

0026854

- 7 -

<u>Claims</u>

<u>"GAS GENERATOR"</u>

1. A process for the production of relatively clean high-pressure gas comprising combusting a hydrocarbon fuel at a temperature less than $2900^\circ$F., shrouding the combustion zone with precombusted gases to control the combustion zone temperature, passing the resultant combustion gas through

(i) particulate separation means (13) to remove the major portion of the ash particles followed by

(ii) a filter bank (15) comprising activated carbon filters (46) and a fine particulates filter (47);

and means for controlling the rate of combustion.

2. The process of claim 1 wherein the gas leaving the particulates filter (47) is passed to an accumulation vessel (51).

3. The process of claim 1 wherein the gas temperature is controlled prior to passing through the activated carbon filter (46) by the injection of lower temperature precombusted gas, to from about $900^\circ$F to $1300^\circ$F.

4. The process of claim 1 wherein lower temperature precombusted gas is injected (50) into the gas flow following the fine particulate solids filter to ensure conversion of any remaining CO to $CO_2$.

5. The process of claim 1 further comprising the step of sensing (16, 17) a gas pressure increase across the particulates filter to signal the need for a replacement filter.

6. Apparatus for producing a relatively clean high pressure gas comprising hydrocarbon fuel supply means (30, 31), a fuel burner (34) capable of burning fuel at up to $2900^\circ$F and 3000 p.s.i., means for feeding precombusted gas (25) into the combustion chamber of said burner in a manner to shroud the walls of said burner from the combustion flame and to control the flame temperature, solids-gas separation means (13) for separating a major portion of the ash (43) from the gas stream (40) received (39) from the combustion chamber (29), activated carbon gas contacting means (46) adapted to receive gas from said solid-gas separation means (13), said activated carbon means being replaceable by uncontaminated activated carbon as its effectiveness decreases and particulate filtration means (47) adapted to remove substantially all solids remaining in said gas stream following treatment with activated carbon (46), and control means (16, 53) to control the combustion rate and temperature according to the gas rate and composition leaving said apparatus.

7. Apparatus of claim 6 wherein activated carbon gas contacting means (46) and said filter (47) comprise a replaceable cartridge (15) mounted on a bank of such cartridges (15) adapted for automatic replacement once such replacement is necessary.

8. Apparatus of claim 6 wherein after said filter there is provided a gas accumulator (51) adapted to store gas from said apparatus prior to its discharge (52) for use.

FIG.1

FIG. 2

FIG. 3

FIG.4

FIG.5

FIG. 6

FIG.7